# EUROPEAN PATENT APPLICATION

(11) **EP 3 461 665 A1**
(43) Date of publication of application: **03.04.2019**
(21) Application number: 18194058.6
(22) Date of filing: 12.09.2018
(51) Int. Cl.: B60H 1/00

(54) **IN-VEHICLE AIR CONDITIONER AND MANUFACTURING METHOD FOR ROTATING MEMBER**

(30) Priority: 27.09.2017 JP 2017186893
(71) Applicant: Valeo Japan Co., Ltd., Saitama 360-0193 (JP)
(72) Inventor: NAGANO, Hideki, SAITAMA, 360-0193 (JP); YOSHIZAKI, Hisayoshi, SAITAMA, 360-0193 (JP)
(74) Representative: Metz, Gaëlle

(57) **Abstract**

A rotating member (70) is provided with a cylindrical part formed in a cylindrical shape having a side hole (24) on the side surface thereof and the side hole is opened between two tangent lines extending in the same direction from two positions forming a diameter on an inner wall surface of the cylindrical shape or between two lines expanded larger toward the side surface than the two tangent lines in cross sectional view orthogonal to the axial direction of the cylindrical shape. The rotating member may be made of resin. A second rotating body (75) is concentrically disposed within the first rotating body (70). Two dampers (101,102) are controlled independently.

## Description

### BACKGROUND OF THE INVENTION

### 1. Field of the Invention

The present invention relates to, for example, an in-vehicle air conditioner and a manufacturing method for a rotating member and, more particularly, to an in-vehicle air conditioner having a door driving member for an air conditioning unit and a manufacturing method for a rotating member for the in-vehicle air conditioner.

### 2. Description of the Related Art

For example, in an in-vehicle air conditioner, air flows having different temperatures may need to be individually blown to more seats including the driver seat, the assistant driver seat, and a plurality of rear seats so as to meet the desires of occupants. In such a case, the mixture ratio between cold air and warm air needs to be changed so that the mixture of cold air and warm air suits to the destinations of air flows. For this purpose, an in-vehicle air conditioner has a plurality of shafts that has concentric rotating axes and rotates independently of each other.

Patent Literature 1 discloses an in-vehicle air conditioner including an air conditioning case that has, therein, an air passage through which air to be supplied to a vehicle cabin passes, a partitioning plate, formed integrally with the air conditioning case or formed separately from the air conditioning case, that partitions the air passage in the air conditioning case into a first section passage and a second section passage, a first door, provided in the first section passage, that opens and closes the first section passage, a second door, provided in the second section passage so as to be aligned with the first door in the axial direction, that opens and closes the second section passage, a first rotational axis part, rotatably supported in at least two positions in the axial direction by the air conditioning case and the partitioning plate, that drives the first door, a second rotational axis part that has a cylindrical shape, is concentric with the first rotational axis part, is rotatably supported by the air conditioning case independently of the first rotational axis part, and drives the second door, and a first door driving shaft that is inserted into and disposed in a cylindrical body of the second rotational axis part, coupled to the other end part of the first rotational axis part on one end side in the axial direction to rotate concentrically and integrally and rotate the first rotational axis part, in which the other end part of the first rotational axis part extends into a cylindrical body of the second rotational axis part and is rotatably fitted to the second rotational axis part.

Patent Literature 1: JP-A-2013-043470

In the structure illustrated in Fig. 3 in Patent Literature 1 described above, two door driving shafts having concentric rotating axes can be achieved. However, since die cutting is performed in the axial direction of the rotating axis during injection molding of an outer shaft in this structure, the diameter of the hole through which the inner shaft passes is not uniform. Accordingly, the shaft center of the inner shaft is easily displaced, possibly causing a rattle when the shafts are used. In addition, assembly processes may be increased and complicated when connection needs to be made in the hole.

### SUMMARY OF THE INVENTION

The invention is intended to solve the conventional problems described above with an object of providing an in-vehicle air conditioner that enables the inner shaft to rotate while suppressing a rattle even when the inner shaft is rotatably disposed in the cylindrical body of the outer shaft and a manufacturing method for a rotating member for the in-vehicle air conditioner.

To solve the above problem, according to a first aspect of the invention, there is provided an in-vehicle air conditioner including a case that has an air passage therein; a partitioning plate that partitions the air passage into a first passage and a second passage, the partitioning plate being formed integrally with the case or formed separately from the case; a first door that is slidably disposed in the first passage, the first door being capable of changing a flow or a flow rate of air passing through the first passage; a second door that is slidably disposed in the second passage, the second door being capable of changing a flow or a flow rate of air passing through the second passage; a first rotating body that is rotatably disposed in the first passage, the first rotating body changing a position in a slide direction of the first door; a second rotating body that is rotatably disposed in the second passage concentrically with the first rotating body, the second rotating body changing a position in a slide direction of the second door; a first rotating body driving part that rotationally drives the first rotating body; a second rotating body driving part that rotationally drives the second rotating body; a rotating force transmitting part that is disposed in the first rotating body, the rotating force transmitting part transmitting a rotating force of the second rotating body driving part to the second rotating body, the rotating force transmitting part being formed integrally with the second rotating body or formed separately from the second rotating body; and a side hole provided at least part of a side surface of the first rotating body.

The first aspect described above mainly includes a form that can be used for a slide door. Although the slide door typically includes a so-called mix door disposed between an evaporator and a heater when conditioned air is generated, the slide door is not limited to the mix door and may include an aspect used for, for example, an open-close door provided in a blowout part for conditioned air.

In addition, to solve the above problem, according to a second aspect of the invention, there is provided the in-vehicle air conditioner including a case that has an air passage therein; a partitioning plate that partitions the air passage into a first passage and a second passage, the partitioning plate being formed integrally with the case or formed separately from the case; a first damper that is rotatably disposed in the first passage, the first damper being capable of changing a flow or a flow rate of air passing through the first passage, the first damper including at least a first rotating body and a first plate part radially extending from the first rotating body; a second damper that is rotatably disposed in the second passage, the second damper being capable of changing a flow or a flow rate of air passing through the second passage, the second damper including at least a second rotating body disposed concentrically with the first rotating body and a second plate part radially extending from the second rotating body; a first rotating body driving part that rotationally drives the first rotating body; a second rotating body driving part that rotationally drives the second rotating body; a rotating force transmitting part that is disposed in the first rotating body, the rotating force transmitting part transmitting a rotating force of the second rotating body driving part to the second rotating body, the rotating force transmitting part being formed integrally with the second rotating body or formed separately from the second rotating body; and a side hole provided at least part of a side surface of the first rotating body.

The second aspect described above mainly includes a form used for a so-called cantilever door or butterfly door. The cantilever door or butterfly door includes an aspect used for a so-called mix door or an open-close door provided in a blowout part for conditioned air.

Although "case that has an air passage therein" is typically achieved by a HVAC (Heating, Ventilation, Air Conditioning) unit in the first aspect and the second aspect described above, the case is not limited to a HVAC unit and is concept including all of cabinets concerning the in-vehicle air conditioner or members achieving this function.

Similarly, although "partitioning plate being formed integrally with the case or formed separately from the case" is typically a separation plate for separating air conditioning between left and right when air conditioning needs to be separated between the driver seat and the assistant driver seat, the partitioning plate is not limited to the separation plate and may be a member having the function of dividing an air flow into a plurality of air flows having directions such as left and right, up and down, and the like within an air conditioner. In addition, "being formed integrally with the case or formed separately from the case" means that the partitioning plate may be formed integrally with the cabinet or may be configured as a separate component and then combined and coupled as necessary.

In the first aspect, the first door and the second door described above only need to achieve the function of changing an upstream air flow by being erected so as to face the air flow passage or restricting the upstream air flow by passing only part of the upstream air flow, any known aspect can be adopted as a mechanism for this purpose, and all of them are included in the technical concepts of the invention. For example, a rack-and-pinion form is typically included as an aspect thereof and, for example, a rack may be carved on the door side and a pinion engageable with the rack may be disposed around the rotational axis in this case.

In the first aspect and the second aspect, "first rotating body driving part that rotationally drives the first rotating body" and "second rotating body driving part that rotationally drives the second rotating body" include all members having a sufficient actuator function for applying a rotating force to the rotating body and is achieved by a motor typically. In addition, although the first rotating body driving part and the second rotating body driving part are typically disposed outside the "case that has an air passage therein", these rotating bodies do not particularly need to be disposed outside the case.

In both aspects, the "rotating force transmitting part" is typically a mechanism in which substantially the half of the second rotating body is inserted into the first rotating body and the first rotating body and the second rotating body are controlled to concentrically rotate independently of each other.

In both aspects, typically, the first rotating body is achieved by a substantially cylindrical rotating member and the second rotating body is achieved by an inside concentric rotating member that passes inside the rotating member and extends longer than the first rotating body. In this case, a member including the rotating member and the inside concentric rotating member can be defined as an air flow rate adjusting mechanism. In this case, in the air flow rate adjusting mechanism, the rotating member has a first door part extending in a radial direction of the cylindrical shape and the inside concentric rotating member has a second door part extending in the radial direction of the cylindrical shape in a position in the extension direction of the rotational axis in which an overlap with the rotating member does not occur, and the first door part and the second door part can operate independently of each other since the rotating member and the inside concentric rotating member rotate independently.

In both aspects, "side hole provided at least part of a side surface of the first rotating body" is typically an opening provided on part of the side surface of the substantially cylindrical rotating member that is the first rotating body and is concept including all members capable of eliminating the effect of a draft angle in the longitudinal direction.

The air flow rate adjusting mechanism according to the disclosure may adopt a third aspect in which the first door has a first rack that slidably moves the first door and the second door has a second rack that slidably moves the second door, the first rotating body has a first pinion to be engaged with the first rack, the second rotating body has a second pinion to be engaged with the second rack, and the first door and the second door operate independently of each other since the first rotating body and the second rotating body rotate independently of each other in the first aspect.

According to a fourth aspect, in any one of the first to third aspects, a cross section of the first rotating body in a position in which the side hole is provided may be formed in an approximate ring shape partially chipped, the cross section being orthogonal to an axial direction, and an opening area of the ring shape may be increased from an inner surface to an outer surface of a wall thickness.

According to a fifth aspect, in any one of the first to third aspects, a cross section of the first rotating body in a position in which the side hole is provided may be formed in an approximate ring shape partially chipped, the cross section being orthogonal to an axial direction, and the ring shape may be opened between two tangent lines extending in the same direction from two positions on an inner wall surface of the ring shape in which the ring shape is partially chipped or between lines expanded larger toward the side surface than the two tangent lines.

According to a sixth aspect, in any one of the first to fifth aspects, a plurality of the side holes may be provided in the first rotating body at predetermined intervals in the axial direction of the first rotating body, a plurality of other side holes other than the plurality of side holes may be provided in positions different from the positions of the plurality of side holes in a circumferential direction between the plurality of side holes.

According to a seventh aspect, in any one of the first to sixth aspects, the first rotating body is preferably made of resin.

To solve the above problem, there is provided a rotating member manufacturing method for manufacturing a rotating member that forms the first rotating body used in the in-vehicle air conditioner according to any one of the first to seventh aspects, the method including the process of extracting a metal mold having a convex semicylindrical shape along a tangent line extending from an end part of a semicircle formed by the semicylindrical shape and the process of disposing a metal mold having an approximate truncated cone shape in a position in which an axis of the truncated cone shape is substantially aligned with an axis of the semicylindrical shape and extracting the metal mold along the axis of the truncated cone shape.

According to the in-vehicle air conditioner and the rotating member manufacturing method according to the invention, even when the inner shaft is rotatably disposed in the cylindrical body of the outer shaft, the inner shaft can be rotated while suppressing a rattle.

### BRIEF DESCRIPTION OF THE DRAWINGS

Fig. 1 is a cross sectional view schematically illustrating an in-vehicle air conditioner according to an embodiment.
Fig. 2 is a front view schematically illustrating an air flow rate adjusting mechanism.
Fig. 2A is a cross sectional view illustrating details of coupling between a rotating member 20 and an inside concentric rotating member 30 in Fig. 2.
Fig. 3 is a side view schematically illustrating the rotating member.
Fig. 4 is a side sectional view mainly illustrating a cylindrical part.
Fig. 5 is a cross sectional view taken along a line V-V in Fig. 3.
Fig. 6 is a cross sectional view taken along a line VI-VI in Fig. 3.
Fig. 7 is a side view schematically illustrating a rotating member according to a first modification.
Fig. 8 is a side sectional view mainly illustrating a cylindrical part according to the first modification.
Fig. 9 is a cross sectional view taken along a line IX-IX in Fig. 7.
Fig. 10 a perspective view mainly illustrating the cylindrical part according to the first modification.
Fig. 11 is a cross sectional view schematically illustrating an example of a metal mold for forming the cylindrical part of the rotating member using injection molding.
Fig. 12 is a side view schematically illustrating a rotating member according to a second modification.
Fig. 13 is a side sectional view mainly illustrating a cylindrical part according to the second modification.
Fig. 14 is a cross sectional view taken along a line XIV-XIV in Fig. 12.
Fig. 15 is a cross sectional view taken along a line XV-XV in Fig. 12.
Fig. 16 is a cross sectional view schematically illustrating an example of a metal mold for forming the cylindrical part of the rotating member using injection molding.
Fig. 17 schematically illustrates another example of the air flow rate adjusting mechanism.
Fig. 18 illustrates a case in which a cylindrical part having a plurality of side holes is applied to the rotating member in Fig. 17.
Fig. 19 is a perspective view illustrating an example of the rotating member used in a butterfly door.
Fig. 20 is a perspective view illustrating an example of the rotating member used in a butterfly door.
Fig. 21 is a perspective view illustrating an example of the rotating member used in a modified butterfly door.
Fig. 22 is a perspective view illustrating an example of the rotating member used in a modified butterfly door.

### DESCRIPTION OF THE PREFERRED EMBODIMENTS

An embodiment of the disclosure will be described below with reference to the drawings. In the description, the same components are given the same reference numeral to omit duplicate description as appropriate.

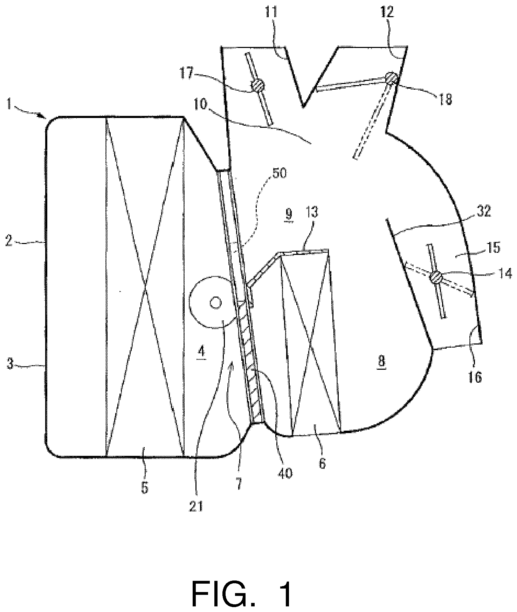

Fig. 1 is a cross sectional view schematically illustrating an in-vehicle air conditioner 1 according to the embodiment. This in-vehicle air conditioner 1 is a semi-integrated type including a blower unit (not illustrated) and a HVAC (Heating, Ventilation, Air Conditioning) unit 2 and is accommodated and disposed in, for example, the center console (not illustrated) of a vehicle. This blower unit may be a known blower unit and can blow one or both of inside air introduced from the inside air introduction port and outside air introduced from the outside air introduction port to the HVAC unit 2 by rotating the fan using the motor. In addition, this blower unit is disposed on the left or right side of the vehicle with respect to the HVAC unit 2.

The HVAC unit 2 includes a case 3 having an air flow passage 4 therein, and a cooling heat exchanger 5, a heating heat exchanger 6, and an air mix door 7 disposed in the air flow passage 4. The cooling heat exchanger 5 may be a known cooling heat exchanger, may be an evaporator or the like that cools the air fed from the blower unit, and is erected so as to pass substantially all air passing through the air flow passage 4. The cooling heat exchanger 5 is formed by, for example, alternately laminating a plurality of layers of corrugated fins and tubes, has a tank at an end in the longitudinal direction of the tubes, and can be coupled to another air conditioning device (not illustrated) via a pipe or the like as appropriate to configure a freezing cycle.

The heating heat exchanger 6 may be a known heating heat exchanger and may be a hot-water heater core or the like that heats the air cooled by the cooling heat exchanger 5. The heating heat exchanger 6 may be formed by, for example, alternately laminating a plurality of layers of corrugated fins and tubes, may have a tank at an end in the longitudinal direction of the tubes, and is coupled to another device (not illustrated) via a pipe or the like as appropriate to form a radiation cycle.

The air mix door 7 is disposed, for example, between the cooling heat exchanger 5 and the heating heat exchanger 6 to adjust the ratio between the air passing through the heating heat exchanger 6 and the air bypassing the heating heat exchanger 6. The air mix door 7 in the embodiment is a slide door type in which, for example, a first slide door 40 is displaced upward and downward by the rotation of a first pinion 21. The air mix door 7 is not limited to a slide door type and may be, for example, a so-called rotary type, cantilever door type, or butterfly door type.

In addition, the HVAC unit 2 has, as part of the air flow passage 4, a hot air flow passage 8 through which the air (hot air) heated by the heating heat exchanger 6 passes, a cold air flow passage 9 through which the air (cold air) having bypassed the heating heat exchanger 6 passes, and an air mix chamber 10, provided downstream of the hot air flow passage 8 and the cold air flow passage 9, in which the hot air meets the cold air. The HVAC unit 2 has a defrost blowout port 11, a vent blowout port 12, and a foot blowout port 16 that communicate with the downstream side of the air mix chamber 10, as the blowout ports through which the air having passed through the air flow passage 4 is blown out.

In the embodiment, the case 3 has an air guide middle wall 13 extending from the middle part in the up-down direction of the air mix door 7 to the top of the heating heat exchanger 6 and this air guide middle wall 13 separates the hot air flow passage 8 from the cold air flow passage 9 and prevents the hot air from unintentionally being mixed with the cold air on the upstream side of the air mix chamber 10.

The defrost blowout port 11 is formed above the HVAC unit 2 and the opening thereof is adjusted by a defrost door 17 disposed in the vicinity of the defrost blowout port 11. The air having passed through the defrost blowout port 11 is blown out toward the front glass of a vehicle via a duct connected as necessary.

The vent blowout port 12 is formed above the HVAC unit 2 and the opening thereof is adjusted by a vent door 18 disposed in the vicinity of the vent blowout port 12. The air having passed through the vent blowout port 12 is blown out toward the upper bodies of occupants in the vehicle via a duct connected as necessary.

The foot blowout port 16 is formed below the HVAC unit 2 and the opening thereof is adjusted by a foot door 14 disposed in the vicinity of the foot blowout port 16. The air having passed through the foot blowout port 16 is blown out toward the feet or lower bodies of occupants in the vehicle via a duct connected as necessary. The foot blowout port 16 is formed at the lower end of a foot flow passage 15 communicating with the air mix chamber 10 in the embodiment. The foot flow passage 15 is separated from the hot air flow passage 8 by a partitioning wall 32.

Various blowout modes can be achieved by adjusting the positions of the defrost door 17, the vent door 18, and the foot door 14 as appropriate. Although the vent door 18 is a cantilever door and the defrost door 17 and the foot door 14 are butterfly doors in the embodiment, these doors may be any of a butterfly door, a rotary door, a cantilever door, and other doors.

Since such a structure is adopted, the air having blown to the HVAC unit 2 from a blower unit (not illustrated) reaches the upstream side of the cooling heat exchanger 5 and is cooled when passing through this cooling heat exchanger 5, the ratio between the air passing through the heating heat exchanger 6 and the air bypassing the heating heat exchanger 6 is adjusted depending on the opening of the air mix door 7, the cooled air is mixed as appropriate in the air mix chamber 10 downstream of the air mix door 7, and the mixed air is blown out to the vehicle cabin via the defrost blowout port 11, the vent blowout port 12, or the foot blowout port 16 that is opened depending on the blowout mode.

In the embodiment, the downstream side of the air mix door 7 is divided by, for example, a partitioning plate 19 into the near side and the far side in the direction orthogonal to the paper surface in Fig. 1. This partitions the vent blowout port 12 and the foot blowout port 16 into a plurality of parts such as, for example, the part for the driver seat and the part for the assistant driver seat, so that temperature adjustment and air volume adjustment are enabled for the driver seat, the assistant driver seat, and the like (also referred to below as "temperature adjustment and the like are enabled").

To enable temperature adjustment and air volume adjustment of the plurality of parts independently, the air mix door 7 may include an air flow rate adjusting mechanism 61 described later, and the vent door 18 and the foot door 14 may include an air flow rate adjusting mechanism 62. Although the number of the partitioning plates 19 is one and the temperature adjustment and the like of two types of blowing such as those for the driver seat and the assistant driver seat are enabled in the embodiment, the temperature adjustment and the like can also be performed in three or more positions including the rear seat and the like by, for example, increasing the number of the partitioning plates 19 to two or more.

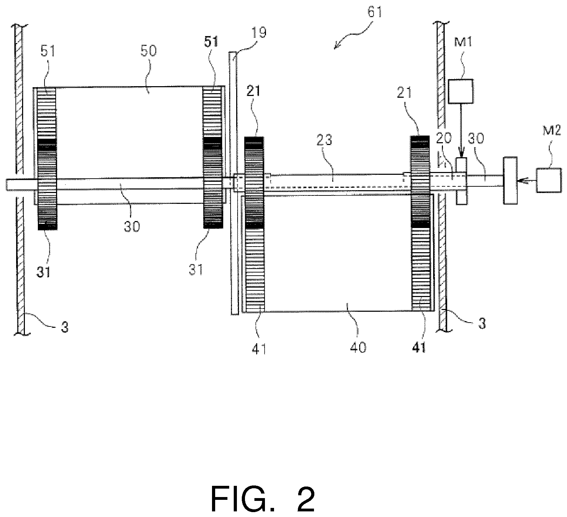

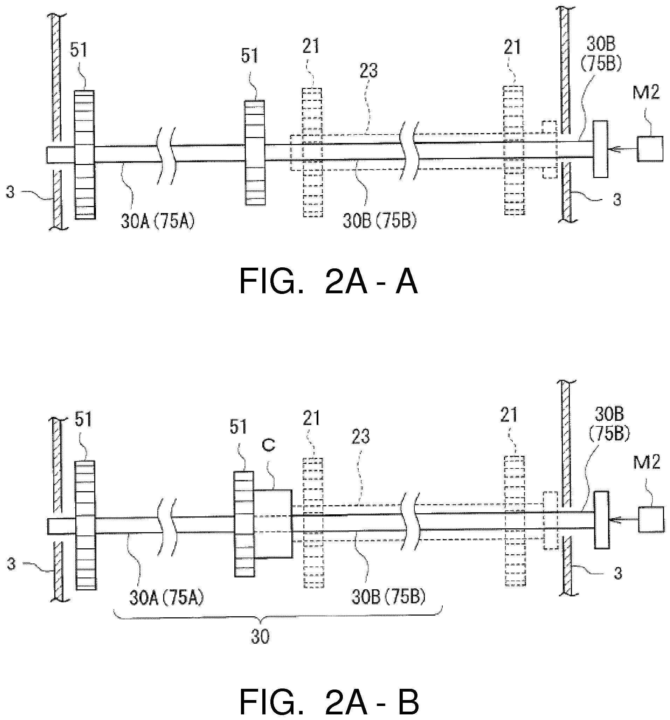

Fig. 2 is an elevational view schematically illustrating the air flow rate adjusting mechanism 61 as seen from the cooling heat exchanger 5. As illustrated in this drawing, the air flow rate adjusting mechanism 61 includes the substantially cylindrical rotating member 20 and the substantially cylindrical inside concentric rotating member 30 that passes through the inside of a cylindrical part 23 of the rotating member 20 and extends longer than the rotating member 20. The rotating member 20, which is the first rotating body, can be driven by a motor M1, which is one aspect of the rotating body driving part (which is an actuator and may be disposed outside the HVAC unit 2), and the inside concentric rotating member 30, which is the second rotating body, can be driven by a motor M2, which is one aspect of the rotating body driving part (which is an actuator and may be disposed outside the HVAC unit 2) . In addition, the air flow rate adjusting mechanism 61 has the first slide door 40, which is the first door, and a second slide door 50, which is the second door, that close and open the flow passage. The first slide door 40 and the second slide door 50 may be disposed with the partitioning plate 19 sandwiched therebetween. In addition, the first slide door 40 has a first rack 41, the rotating member 20 has the first pinion 21 corresponding to the first rack 41 of the first slide door 40, and the first rack 41 and the first pinion 21 are engaged with each other. The second slide door 50 has a second rack 51, the inside concentric rotating member 30 has a second pinion 31 corresponding to the second rack 51 of the second slide door 50 in a position in the extension direction of the rotational axis in which an overlap with the rotating member 20 does not occur, and the second rack 51 and the second pinion 31 are engaged with each other. Accordingly, the first slide door 40 and the second slide door 50 can operate independently of each other since the rotating member 20 and the inside concentric rotating member 30 rotate independently of each other.

Fig. 2A is a cross sectional view illustrating details of the coupling between the rotating member 20 and the inside concentric rotating member 30 in Fig. 2. (a) of Fig. 2A illustrates an aspect in which a part 30B, which is an extension member of the inside concentric rotating member 30A and inserted into the rotating member 20, is formed integrally with the inside concentric rotating member 30A. (b) of Fig. 2A illustrates an aspect in which a part 30B, which is an extension member of the inside concentric rotating member 30A and inserted into the rotating member 20, is formed separately from the inside concentric rotating member 30A. In (b) of Fig. 2A, the inside concentric rotating member 30A and the inside concentric rotating member 30B are connected so that these members are coupled to each other concentrically by, for example, a connector part C. Connection between the inside concentric rotating member 30A and the inside concentric rotating member 30B is not limited to the aspect in which the connector part C is used and any known aspect of concentric connection can be adopted and is included in the technical concepts of the invention.

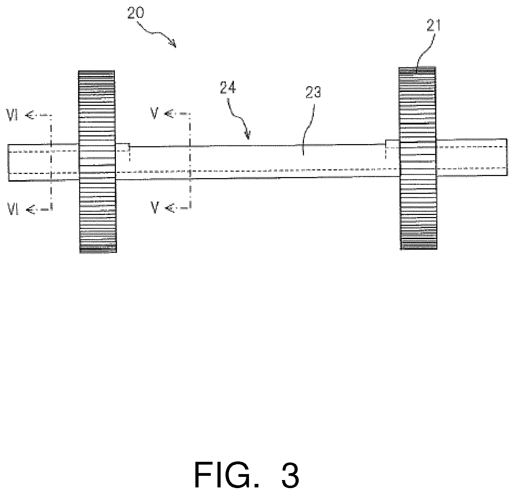

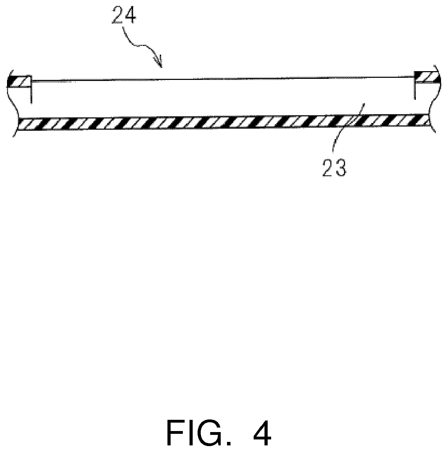

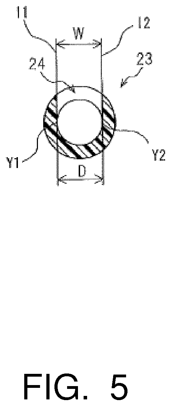

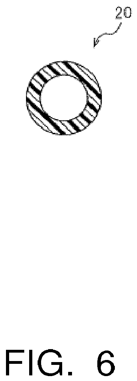

Fig. 3 is a side view schematically illustrating the rotating member 20. Fig. 4 is a sectional view illustrating part of a cross section of mainly the cylindrical part 23 of the rotating member 20 taken along a vertical plane parallel to the longitudinal direction. Fig. 5 is a cross sectional view taken along the line V-V in Fig. 3. Fig. 6 is a cross sectional view taken along the line VI-VI in Fig. 3. The rotating member 20 is preferably made of resin.

As illustrated in these drawings, the rotating member 20 has the cylindrical part 23, formed in a cylindrical shape, that has a side hole 24 in the side surface thereof. The side hole 24 is opened between two tangent lines 11 and 12 extending in the same direction from two points Y1 and Y2 that form a diameter D on the inner wall surface of the cylindrical shape or between lines expanded slightly larger (not illustrated) toward the side surface than these two tangent lines in cross sectional view (Fig. 5) orthogonal to the axial direction of the cylindrical shape. That is, in Fig. 5, the side hole 24 may be formed to have an opening width W (on the side surface) that is equal to the diameter D that is equal to the distance between 11 and 12 or may be formed to have an opening width W slightly larger (not illustrated) than the diameter D.

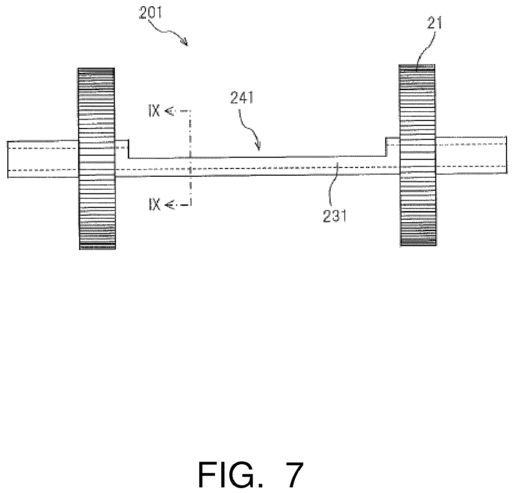

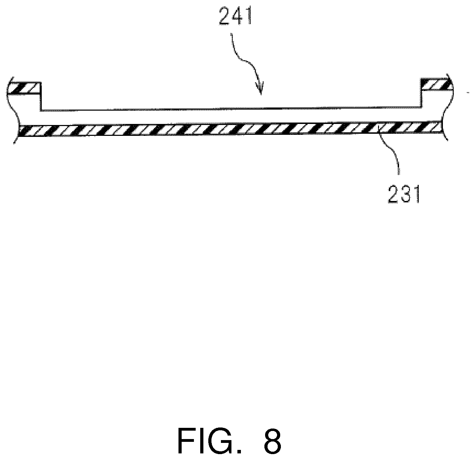

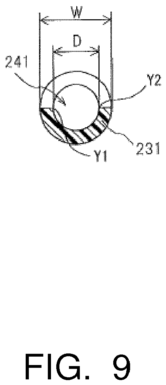

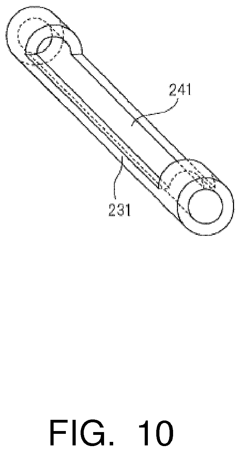

Fig. 7 is a side view schematically illustrating the rotating member 201 according to the first modification. Fig. 8 is a sectional view illustrating part of a cross section of mainly the cylindrical part 231 according to the first modification taken along a vertical plane parallel to the longitudinal direction. Fig. 9 is a cross sectional view taken along the line IX-IX in Fig. 7. Fig. 10 is a perspective view schematically illustrating mainly the cylindrical part 231 according to the first modification. As illustrated in these drawings, the rotating member 201 according to the first modification may have the cylindrical part 231 having a side hole 241 in the side surface thereof and the side hole 241 may have a structure in which the side hole 241 is opened between lines expanded larger than two tangent lines extending in the same direction from two points Y1 and Y2 that form a diameter D on the inner wall surface having a cylindrical shape in cross sectional view (Fig. 9) orthogonal to the axial direction of the cylindrical shape (Fig. 9 illustrates an aspect in which Y1 and Y2 are substantially linearly aligned with the expanded lines, that is, the lines are expanded at 180 degrees). That is, in Fig. 9, the opening of the side hole 241 is formed by lines extending from the two positions forming the diameter D to the side surface in a single line and the opening width W on the side surface of the side hole 241 is larger than the diameter D on the inner wall surface.

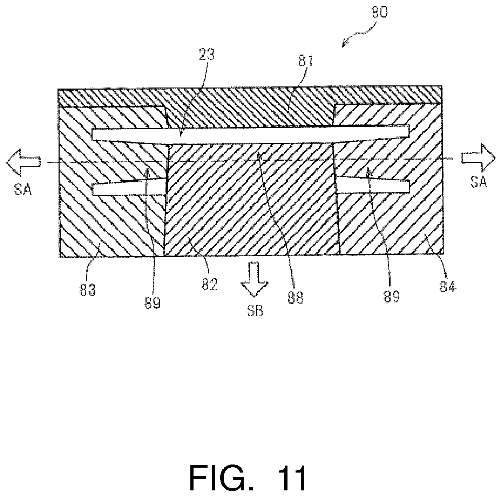

Fig. 11 is a cross sectional view schematically illustrating an example of a metal mold 80 for forming mainly the cylindrical parts 23 and 231 of the rotating member 20 according to the embodiment and the rotating members 20 and 201 according to the first modification using injection molding. As illustrated in this drawing, the metal mold 80 includes a cavity mold 81, a core mold 82, and slide molds 83 and 84. The cavity mold 81 defines the shape of the outer wall surface of the cylindrical part 23. The core mold 82 defines the shape of the inner wall surface of the cylindrical part 23 and has a convex semicylindrical shape 88. Each of the slide molds 83 and 84 have a truncated cone shape 89. The manufacturing process of the rotating member 20 using the metal mold 80 described above may include a process SB that performs extraction along tangent lines extending from the end parts of a semicircle formed by the semicylindrical shape 88 of the core mold 82 and a process SA that aligns the axis of the truncated cone shape 89 with the axis of the semicylindrical shape 88 and then performs extraction along this axis, after the metal mold 80 is filled with resin. The first pinion may also be formed integrally with the rotating member 20 by using a well-known technique and executing the process SA and/or the process SB.

Here, of the inner wall surface of the cylindrical part 23, the inner wall surface formed in the process SB is preferably formed along the longitudinal direction (direction in which the rotational axis extends) of the rotating member 20 so as to have the constant diameter D. When the cylindrical part 23 is formed using only the process SA so that the inner wall surface extends along the longitudinal direction, the diameter D of the inner wall surface increases toward the end part of the cylindrical part 23 in the longitudinal direction since a so-called draft angle needs to be obtained. When the inside concentric rotating member 30 is disposed in the rotating member 20 in which the cylindrical part 23 is formed using only the process SA and then rotated, the inside concentric rotating member 30 is rotated according to the draft angle of the inner wall of the cylindrical part 23, possibly causing a deviation between the extension directions of the rotational axes of the rotating member 20 and the inside concentric rotating member 30. In contrast, when the inner wall surface formed in the process SB of the inner wall surface of the cylindrical part 23 is formed so that the diameter D is constant, the extension direction of the rotational axis of the rotating member 20 can easily coincide with the extension direction of the rotational axis of the inside concentric rotating member 30. This causes the rotating member 20 and the inside concentric rotating member 30 to rotate smoothly and the air flow rate adjusting mechanism 61 to operate smoothly with low vibration. This is also true of the first modification.

Since the rotating members 20 and 201 according to the embodiment and the modification thereof have the schematically semicircular inner wall having a uniform diameter in the cylindrical parts 23 and 231 as described above, even when the inside concentric rotating member 30 is disposed in the rotating members 20 and 201, the inside concentric rotating member 30 can rotate while suppressing mutual rattles. In addition, since each of the rotating members 20 and 201 and the inside concentric rotating member 30 can be formed as one component, it is possible to reduce the number of processes in the manufacturing process and the assembly process and simplify these processes.

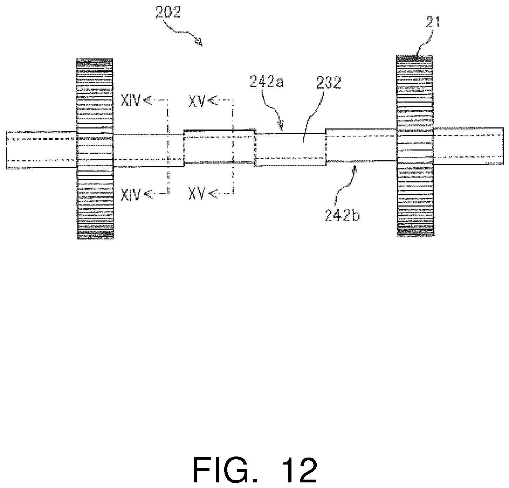

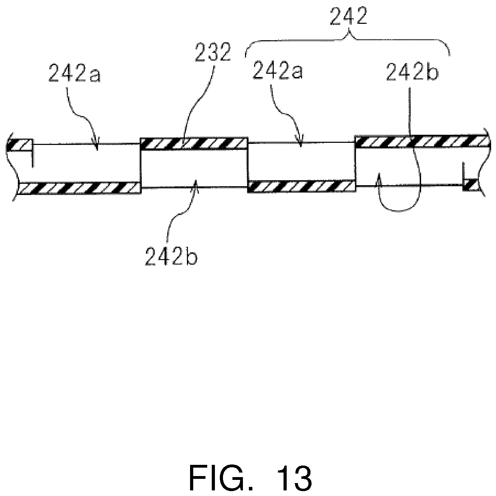

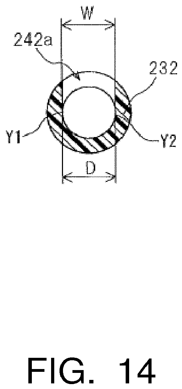

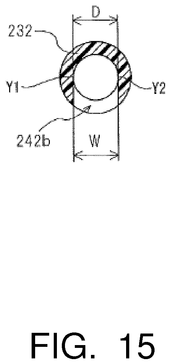

Fig. 12 is a side view schematically illustrating the rotating member 202 according to the second modification. Fig. 13 is a sectional view illustrating part of a cross section of mainly the cylindrical part 232 according to the second modification taken along a vertical plane parallel to the longitudinal direction. Fig. 14 is a cross sectional view taken along the line XIV-XIV in Fig. 12. Fig. 15 is a cross sectional view taken along the line XV-XV in Fig. 12. As illustrated in these drawings, the rotating member 202 according to the second modification has the cylindrical part 232, formed in a cylindrical shape, that has side holes 242a and 242b alternately in the side surface thereof and the side holes 242a and 242b are opened between two tangent lines extending in the same direction from the two points Y1 and Y2 that form the diameter D on the inner wall surface of the cylindrical shape or between lines expanded slightly larger (not illustrated) toward the side surface than these two tangent lines in cross sectional view orthogonal to the axial direction of the cylindrical shape. That is, in Fig. 14 and Fig. 15, the side holes 242 may be formed to have an opening width W (on the side surface) that is equal to the diameter D or slightly larger (not illustrated) than the diameter D.

In addition, in the side surface of the cylindrical part 232, for example, other side holes (not illustrated) may be provided in positions (for example, not limited to the opposite side of the side hole 242a) different from the positions of the two side holes 242a in the circumferential direction between the two side holes 242a arranged in the axial direction of the cylindrical shape. In addition, the position and the shape of the side hole 242a and the shape of the side hole 242b in Fig. 12 are indicated as an example and the invention is not limited to this example.

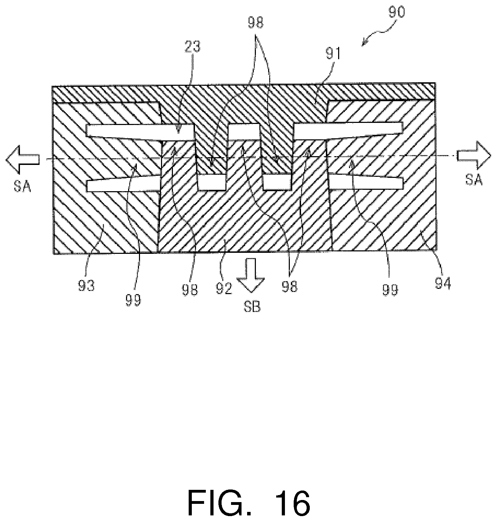

Fig. 16 is a cross sectional view schematically illustrating an example of a metal mold 90 for forming mainly the cylindrical part 232 of the rotating member 202 according to the second modification of the embodiment using injection molding. As illustrated in this drawing, the metal mold 90 includes a cavity mold 91, a core mold 92, and slide molds 93 and 94. The cavity mold 91 and the core mold 92 define the shape of the outer wall surface of the cylindrical part 232 and define the shape of the inner wall surface of the cylindrical part 232. The part that defines the shape of the inner wall surface has a convex semicylindrical shape 98. Each of the slide molds 93 and 94 has a truncated cone shape 99. The manufacturing process of the rotating member 202 using the metal mold 90 described above may include the process SB that performs extraction along a tangent line extending from the end part of a semicircle formed by the semicylindrical shape 98 of the cavity mold 91 and the core mold 92 and the process SA that aligns the axis of the truncated cone shape 99 with the axis of the semicylindrical shape 98 and then performs extraction along this axis, after the metal mold 90 is filled with resin. The first pinion may also be formed integrally with the rotating member 202 by using a well-known technique and executing the process SA and/or the process SB.

Also in the embodiment, of the inner wall surface of the cylindrical part 232, the inner wall surface formed in the process SB is preferably formed along the longitudinal direction (direction in which the rotational axis extends) of the rotating member 202 so as to have the constant diameter D. The extension direction of the rotational axis of the rotating member 202 can easily coincide with the extension direction of the rotational axis of the inside concentric rotating member 30.

Since the rotating member 202 according to the modification of the embodiment has the inner wall surface, formed in an approximate semicircle, that has a uniform diameter in the cylindrical part 232 as described above, even when the inside concentric rotating member 30 is disposed in the rotating member 202, the inside concentric rotating member 30 can rotate while suppressing mutual rattles. In addition, since each of the rotating member 202 and the inside concentric rotating member 30 can be formed as one component, it is possible to reduce the number of processes in the manufacturing process and the assembly process and simplify these processes.

Although the rotating member 20 (or the rotating members 201 and 202) is the rotating member 20 (or the rotating members 201 and 202) of the air flow rate adjusting mechanism 61 of slide door type in the embodiment and the modifications described above, the rotating member 20 (or the rotating members 201 and 202) is applicable to a door of another type. In addition, the rotating member 20 is applicable to, for example, the vent door 18, the foot door 14, and the like in addition to the air mix door.

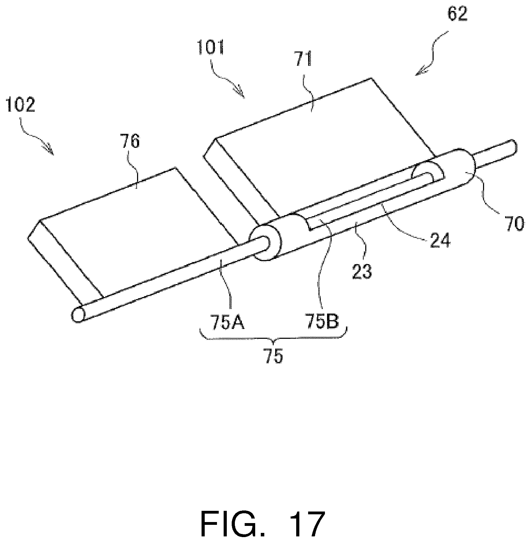

Fig. 17 schematically illustrates an example of the air flow rate adjusting mechanism 62 to be applied to, for example, the vent door 18 and the foot door 14. As illustrated in this drawing, the air flow rate adjusting mechanism 62 has a substantially cylindrical rotating member 70 and a substantially cylindrical inside concentric rotating member 75 inserted into the cylindrical part 23 of the rotating member 70 and extending longer than the rotating member 70. A first damper 101 has the rotating member 70, which is the first rotating body, and a first door part 71 extending in a radial direction of the cylindrical shape. A second damper 102 has the inside concentric rotating member 75, which is the second rotating body, and a second door part 76 extending in a radial direction of the cylindrical shape in a position in the extension direction of the rotational axis in which an overlap with the rotating member 70 does not occur. Accordingly, the first door part 71 and the second door part 76 can operate independently of each other since the rotating member 70 and the inside concentric rotating member 75 rotate independently of each other. It should be noted that the cylindrical part 23 may have the same structure as the rotating member 20 described above. In addition, although Fig. 17 illustrates the cylindrical part 23 of the rotating member 70 as the cylindrical part 23 having one side hole 24 as illustrated in Fig. 3 to Fig. 6, the cylindrical part 231 or the cylindrical part 232 according to the first modification or the second modification can be adopted in place of the cylindrical part 23. Also in the form illustrated in Fig. 17, the above description about Fig. 2A is applied. That is, also in the air flow rate adjusting mechanism 62 to be applied to the vent door 18 and the foot door 14, in the relationship between the rotating member 70 and the inside concentric rotating member 75, a part 75B that is an extension member of the inside concentric rotating member 75A and inserted into the rotating member 70 may be formed integrally with the inside concentric rotating member 75A (see (a) of Fig. 2A) or the inside concentric rotating member 75B that is an extension member of the inside concentric rotating member 75A and inserted into the rotating member 70 may be formed separately from the inside concentric rotating member 75A (see (b) of Fig. 2A).

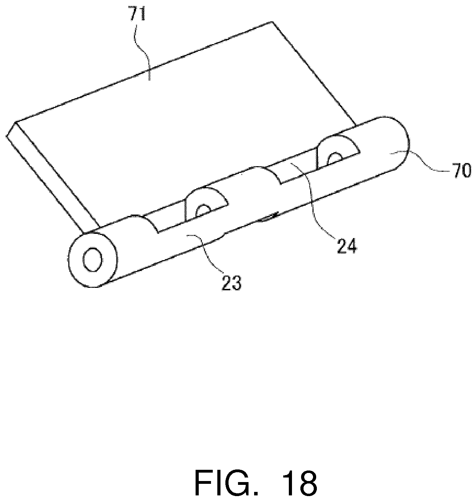

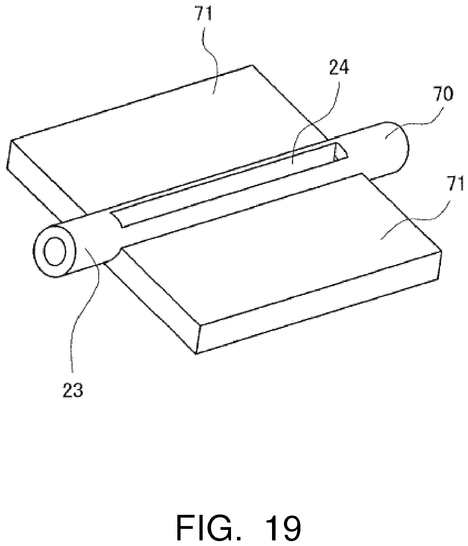

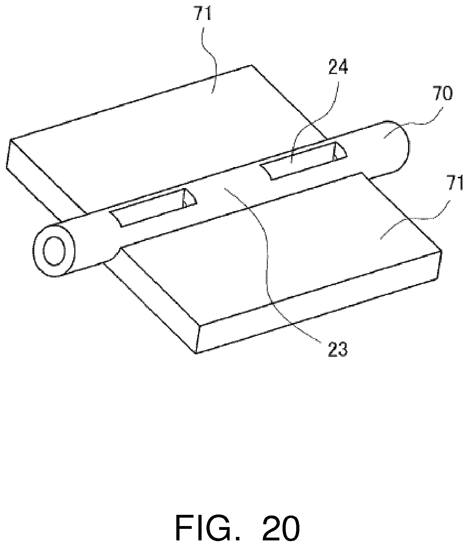

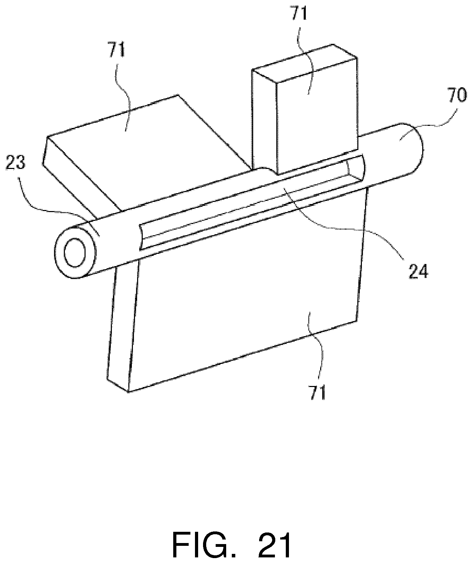

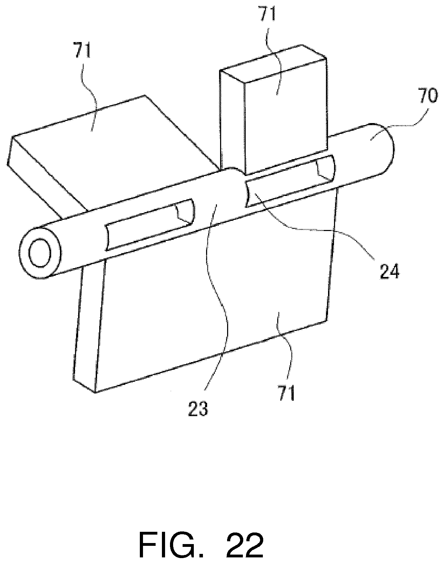

Fig. 18 illustrates the case in which the cylindrical part 232 having the plurality of side holes 242 illustrated in Fig. 12 to Fig. 15 is applied to the rotating member 70 in Fig. 17. Fig. 19 is a perspective view illustrating the rotating member 70 having one side hole 24 when the rotating member 70 is used in a butterfly door having two first door parts 71 via the cylindrical part 23. Fig. 20 is a perspective view illustrating the rotating member 70 having two side holes 24 when the rotating member 70 is used in a butterfly door having two first door parts 71 via the cylindrical part 23. Fig. 21 is a perspective view illustrating the rotating member 70 having one side hole 24 when the rotating member 70 is used in a butterfly door having three first door parts 71 via the cylindrical part 23. Fig. 22 is a perspective view illustrating the rotating member 70 having a plurality of side holes 24 when the rotating member 70 is used in a modified butterfly door having three first door parts 71 via the cylindrical part 23.

Since the rotating member 70 according to the embodiment has the semicircular inner wall having a uniform diameter in the cylindrical part 23 as described above, even when the inside concentric rotating member 75 is disposed in the rotating member 70, the inside concentric rotating member 75 can rotate while suppressing mutual rattles. In addition, since each of the rotating member 70 and the inside concentric rotating member 75 can be formed as one component, it is possible to reduce the number of processes in the manufacturing process and the assembly process and simplify the processes.

The extension of technical concept according to the invention is not limited to the embodiment and aspects described above and various types of expansion, reduction, replacement, and the like are allowed and they are included in the technical concept of the invention. For example, the air flow rate adjusting mechanism 62 illustrated in Fig. 17 to Fig. 22 may be applied to the air mix door 7.

As described above, the invention has great applicability in air conditioner industry, especially in automobile industry treating air conditioning.

### Description of Reference Numerals and Signs

1: in-vehicle air conditioner
5: cooling heat exchanger
6: heating heat exchanger
7: air mix door
12: vent blowout port
14: foot door
16: foot blowout port
18: vent door
19: partitioning plate
20: rotating member
21: first pinion
23: cylindrical part
24: side hole
30: inside concentric rotating member
31: second pinion
40: first slide door
41: first rack
50: second slide door
51: second rack
61, 62: air flow rate adjusting mechanism
70: rotating member
71, 76: door part
75: inside concentric rotating member

## Claims

1. An in-vehicle air conditioner (1) **characterized by** comprising:
a case (3) that has an air passage (4) therein;
a partitioning plate (19) that partitions the air passage into a first passage and a second passage, the partitioning plate being formed integrally with the case or formed separately from the case;
a first door (40) that is slidably disposed in the first passage, the first door being capable of changing a flow or a flow rate of air passing through the first passage;
a second door (50) that is slidably disposed in the second passage, the second door being capable of changing a flow or a flow rate of air passing through the second passage;
a first rotating body (20) that is rotatably disposed in the first passage, the first rotating body changing a position in a slide direction of the first door;
a second rotating body (30) that is rotatably disposed in the second passage concentrically with the first rotating body, the second rotating body changing a position in a slide direction of the second door;
a first rotating body driving part (M1) that rotationally drives the first rotating body;
a second rotating body driving part (M2) that rotationally drives the second rotating body;
a rotating force transmitting part (30B) that is disposed in the first rotating body, the rotating force transmitting part transmitting a rotating force of the second rotating body driving part to the second rotating body, the rotating force transmitting part being formed integrally with the second rotating body or formed separately from the second rotating body; and
a side hole (24, 241, 242a, 242b) provided at least part of a side surface of the first rotating body.

2. An in-vehicle air conditioner (1) **characterized by** comprising:
a case (3) that has an air passage (4) therein;
a partitioning plate (19) that partitions the air passage into a first passage and a second passage, the partitioning plate being formed integrally with the case or formed separately from the case;
a first damper (101) that is rotatably disposed in the first passage, the first damper being capable of changing a flow or a flow rate of air passing through the first passage, the first damper including at least a first rotating body (70) and a first plate part (71) radially extending from the first rotating body;
a second damper (102) that is rotatably disposed in the second passage, the second damper (102) being capable of changing a flow or a flow rate of air passing through the second passage, the second damper including at least a second rotating body (75) disposed concentrically with the first rotating body and a second plate part (76) radially extending from the second rotating body;
a first rotating body driving part (M1) that rotationally drives the first rotating body;
a second rotating body driving part (M2) that rotationally drives the second rotating body;
a rotating force transmitting part (75B) that is disposed in the first rotating body, the rotating force transmitting part transmitting a rotating force of the second rotating body driving part to the second rotating body, the rotating force transmitting part being formed integrally with the second rotating body or formed separately from the second rotating body; and
a side hole (24, 241, 242a, 242b) provided at least part of a side surface of the first rotating body.

3. The in-vehicle air conditioner (1) according to claim 1,
wherein the first door (40) has a first rack (41) that slidably moves the first door and the second door (50) has a second rack (51) that slidably moves the second door,
the first rotating body has a first pinion (21) to be engaged with the first rack,
the second rotating body has a second pinion (31) to be engaged with the second rack,
the first door and the second door operate independently of each other since the first rotating body and the second rotating body rotate independently of each other.

4. The in-vehicle air conditioner (1) according to any one of claims 1 to 3,
wherein a cross section of the first rotating body in a position in which the side hole is provided is formed in an approximate ring shape partially chipped, the cross section being orthogonal to an axial direction, and an opening area of the ring shape is increased from an inner surface to an outer surface of a wall thickness.

5. The in-vehicle air conditioner (1) according to any one of claims 1 to 3,
wherein a cross section of the first rotating body in a position in which the side hole is provided is formed in an approximate ring shape partially chipped, the cross section being orthogonal to an axial direction, and the ring shape is opened between two tangent lines extending in the same direction from two positions on an inner wall surface of the ring shape in which the ring shape is partially chipped or between lines expanded larger toward the side surface than the two tangent lines.

6. The in-vehicle air conditioner (1) according to any one of claims 1 to 5,
wherein a plurality of the side holes is provided in the first rotating body at predetermined intervals in the axial direction of the first rotating body, a plurality of other side holes other than the plurality of side holes is provided in positions different from the positions of the plurality of side holes in a circumferential direction between the plurality of side holes.

7. The in-vehicle air conditioner (1) according to any one of claims 1 to 6,
wherein the first rotating body is made of resin.

8. A rotating member manufacturing method for manufacturing a rotating member that forms the first rotating body used in the in-vehicle air conditioner (1) according to any one of claims 1 to 7, the method **characterized by** comprising:
the process (SB) of extracting a metal mold (88, 98) having a convex semicylindrical shape along a tangent line extending from an end part of a semicircle formed by the semicylindrical shape; and
the process (SA) of disposing a metal mold (89, 99) having an approximate truncated cone shape in a position in which an axis of the truncated cone shape is substantially aligned with an axis of the semicylindrical shape and extracting the metal mold (89, 99) along the axis of the truncated cone shape.
